# EUROPÄISCHE PATENTSCHRIFT

(11) **EP 2 072 561 B1**
(45) Veröffentlichungstag und Bekanntmachung des Hinweises auf die Patenterteilung: **09.06.2010**
(21) Anmeldenummer: 08171291.1
(22) Anmeldetag: 11.12.2008
(51) Int. Cl.: C08J 3/20, C09K 8/528, C09K 17/14, C09K 17/48, E21B 37/06

(54) **Verkehrswegsbehandlung**
Route treatment
Traitement de voies de circulation

(30) Priorität: 20.12.2007 DE 102007061773
(43) Veröffentlichungstag der Anmeldung: 24.06.2009
(73) Patentinhaber: LANXESS Deutschland GmbH, 51369 Leverkusen (DE)
(72) Erfinder: Moritz, Ralf-Johann, 41469, Neuss (DE); Wambach, Wolfgang, 51065, Köln (DE); Klein, Thomas, 69126, Heidelberg (DE)

(56) Entgegenhaltungen:
- EP-A- 1 464 627
- WO-A-02/16731
- DE-A1- 19 603 052
- JP-A- 2004 105 824

## Beschreibung

Die vorliegende Erfindung betrifft die Verwendung von Verbindungen der Reihe Polyacrylate, Polyasparaginsäure oder Alkalihydroxide als Lösungsbeschleuniger für Polysuccinimide und dessen dadurch möglicher Einsatz zur Behandlung von Verkehrswegen und deren Entwässerungssystemen zwecks Stabilisierung der Wasserhärte und zur Verhinderung von Versinterungen.

Natürliche Sicker- und Grundwässer besitzen aufgrund der Bodenatmung (Kohlendioxid-Produktion im Boden) und des behinderten Gasaustauschs zwischen Bodenluft und freier Atmosphäre in der Regel höhere Gehalte an gelöstem Kohlendioxid als Oberflächenwässer im Gleichgewicht mit der freien Atmosphäre. Demzufolge können natürliche Sicker- und Grundwässer in Kontakt mit kalkhaltigem Gestein höhere Mengen an Erdalkalicarbonaten lösen als Oberflächenwässer. Stehen die natürlichen Sicker- und Grundwässer dann wieder im Gleichgewicht mit der freien Atmosphäre, z. B. in den Entwässerungsleitungen, desorbiert das überschüssige gelöste Kohlendioxid in die Atmosphäre, wodurch die Löslichkeit der Erdalkalicarbonate zurückgeht und die überschüssigen gelösten Erdalkalicarbonate als thermodynamisch stabile Versinterungen aus dem Wasser ausfallen. Besonders problematisch hinsichtlich der Versinterungsentstehung in den Entwässerungsleitungen von Geländeeinschnitten sind die baulichen Sicherungsmaßnahmen in den Böschungen der Lockergesteinseinschnitte, die zur Gewährleistung der bauzeitlichen und dauerhaften Standsicherheit der Böschungen erforderlich waren. Üblicherweise umfassen die Sicherungsmaßnahmen im Bereich der Lockergesteinseinschnitte beispielsweise moderner Schnellverkehrsverbindungen umfangreiche Sicherungsmittel in Form von mehrreihigen und engständigen Groß- und Kleinbohrdübeln (Bohrpfählen), Verankerungen, Bohrpfahlwänden und Kopfbalken etc. Diese Bauteile enthalten große Mengen an Beton und Mörteln und stehen überwiegend in Kontakt mit dem Grundwasser, wobei aufgrund der geringen Wasserdurchlässigkeiten mit langen Kontaktzeiten zwischen Grundwasser und Beton bzw. Mörtel und deshalb mit einer ausgeprägten Elution von mehr- oder weniger gut löslichen Bestandteilen aus den Baustoffen zu rechnen ist.

Die Elution des gut löslichen Portlandits (Calciumhydroxid) aus dem Beton bzw. Mörtel, welche auch die Hauptursache für die pH-Wert-Erhöhung des Grundwassers ist, spielt eine große Rolle für die Entstehung von Versinterungen. Durch den Kontakt des Grundwassers mit den zementgebundenen Baustoffen wird dem Grundwasser in einem ersten Reaktionsschritt das gelöste Kohlendioxid entzogen, was zur Carbonatisierung des Betons führt; denn Calciumcarbonat ist thermodynamisch stabiler als Calciumhydroxid. Im zweiten Reaktionsschritt löst das kohlendioxidarme Grundwasser Calciumhydroxid, was aufgrund seiner geringeren thermodynamischen Stabilität eine deutlich höhere Löslichkeit als Calciumcarbonat besitzt. Das derart angereicherte Grundwasser enthält demzufolge wesentlich höhere Gehalte an gesamt gelöstem Calcium und sehr hohe pH-Werte. Kommt das portlandithaltige Grundwasser wieder in Kontakt mit Kohlendioxid, z. B. durch Mischung mit einem kohlendioxidhaltigen Grundwasser oder durch Absorption aus der freien Atmosphäre in den Entwässerungsleitungen, fällt das überschüssige gelöste Calcium als thermodynamisch stabiles Calciumcarbonat aus dem Wasser aus, was die Entstehung vor relativ großen Mengen an Versinterungen innerhalb vergleichsweise kurzer Zeiträume zur Folge hat.

WO 02/16731 A3 lehrt den Einsatz von Polysuccinimid (PSI) in Kombination mit Hilfsstoffen aus gesättigten oder ungesättigten, linearen oder verzweigten Aryl- oder Alkylverbindungen mit 5-50 C-Atomen, bevorzugt Fettsäuren zur Konditionierung stehender oder fließender Gewässer. Die Hilfsstoffe werden dahingehend ausgewählt, um die Depotwirkung des PSI zu erhöhen.

Aus CH 694 022 A5 sind Kalkschutzsteine und ein Verfahren zur Minimierung von Ablagerungen in Bauwerksentwässerungssystemen, bevorzugt Tunnelentwässerungsanlagen, bekannt, wobei als Konditionierungsmittel unter anderem PSI eingesetzt werden kann.

Die im Stand der Technik beschriebenen Maßnahmen zielen jedoch darauf ab, die Depotwirkung des PSI zu erhöhen. Dies kann jedoch bei Drainagen in offene m Gelände von Nachteil sein, so beispielsweise auf Bahnanlagen und deren Schotterbetten.

Es bestand daher die Aufgabe, PSI auch außerhalb von geschlossenen Bauwerken wie den im Stand der Technik beschriebenen Tunnelsystemen für die Konditionierung von Sickerwässern zugänglich zu machen, wobei man die ohnehin bereits durch die Molekularstruktur des PSI als Polymer gegebene Depotwirkung nutzt, gleichzeitig aber für einen raschen Eintrag ins zu konditionierende Wasser sorgt.

Erfindungsgemäß wird die Aufgabe gelöst, indem man PSI in Pulverform oder als Granulat auf den zu behandelnden Verkehrsweg ausbringt und mit einem Lösungsbeschleuniger als Hilfsmittel in die darunter liegenden Schichten des Verkehrsweges bis in die Drainagen einspült.

Gegenstand der vorliegenden Erfindung ist die Verwendung einer Verbindung der Reihe Polyacrylate, Polyasparaginsäure oder Alkalihydroxide als Lösungsbeschleuniger für PSI, bevorzugt dann, wenn man das in Pulver- oder Granulatform auf den zu behandelnden Verkehrsweg ausbringt und dieses mit dem Lösungsbeschleuniger oder einem Gemisch dieser Lösungsbeschicuniger in die darunter liegenden Schichten des Verkehrsweges bis in die Drainagen einspült.

In einer alternativen, ebenfalls bevorzugten Ausführungsform, kann auch oder zusätzlich zu den oben genannten Lösungsbeschleunigern Wasser mit einem pH-Wert von 8-11, bevorzugt 9-10 als Lösungsbeschleuniger dienen.

Überraschenderweise erzielt man durch die Verwendung eines Lösungsbeschleunigers der oben genannten Reihe eine wirksame Konzentration an PSI in den vor Versinterungen zu schützenden unteren Schichten von Verkehrswegen bis in die Sickerpackungen bzw. Drainagen unter gleichzeitiger Beibehaltung der Depotwirkung des PSI im bzw. auf dem Verkehrsweg selber.

Verkehrswege im Sinne der vorliegenden Erfindung sind Straßen, Schienentrassen, Rennpisten, Schotterstraßen, Bahntrassen oder Bahnanlagen sowie die Schotterbetten von Bahnanlagen nebst dazugehörender Sickerpackungen und Drainagesysteme.

Das PSI wird in Pulver- oder Granulatform ausgebracht. Bevorzugt beträgt die Teilchengröße des Pulvers/Granulats 0,001 cm bis 3 cm, besonders bevorzugt 0,01 cm bis 2 cm.

Die pro laufenden Quadratmeter Verkehrsweg auszubringende Menge an PSI beträgt bevorzugt 1 bis 10 kg PSI. Sie orientiert sich dabei an den gesetzlichen Vorschriften des jeweiligen Landes im Hinblick auf den Gewässerschutz. Erfindungsgemäß wird angestrebt, dass im zu konditionierenden Sicker- oder Grundwasser auftretende Abbauprodukte des PSI (wasserlösliche Teilhydolysate des PSI und Polyasparaginsäure) eine Konzentration von 100 mg/Liter, bevorzugt von 50 mg/Liter, besonders bevorzugt von 20 mg/Liter nicht überschreiten. Bevorzugt wird dieser Wert in den Sickerpackungen gemessen. Der daraus zu ermittelnde Bedarf wird iterativ durch Analyse des am Behandlungsort vorliegenden Wassers, der Umgebungstemperatur und seines Gehalts an Erdalkaliionen ermittelt. Auch der Einfluss von Regenwasser wird dabei berücksichtigt sowie ggf. weitere dem Fachmann bekannte Einflussfaktoren.

PSI kann in großtechnischem Maßstab durch thermische Polymerisationen von Maleinsäureanhydrid und Ammoniak oder deren Derivate hergestellt werden (siehe US-A 3,846,380; US-A 4,839, 461; US-A 5,219,952 oder US-A 5,371,180).

Darüber hinaus erhält man PSI durch thermische Polymerisation von Asparaginsäure (US-A 5,051,401) gegebenenfalls in Gegenwart saurer Katalysatoren/Lösungsmittel (US-A 3,052,565).

PSI fällt bei der chemischen Synthese als Polymer mit einem mittleren Molgewicht von 500 bis 20.000, bevorzugt 3.000 bis 5.000, an. Polysuccinimid ist als chemischer Vorläufer der Polyasparaginsäure zu betrachten, zu der es mit Wasser langsam hydrolysiert. Der pH-Wert der dabei entstehenden Lösungen liegt zwischen pH von 1 bis 4, bevorzugt 2 bis 3. Hierdurch kommt nicht nur die gute steinlösende, sondern auch gleichzeitig die dispergierende Wirkung der durch PSI freigesetzten Polyasparaginsäure gegenüber schwerlöslichen Calciumsalzen bzw. anderen schwerlöslichen Stoffen zum Tragen. Die resultierende saure Lösung führt aufgrund ihrer Säurewirkung auch zur direkten Auflösung eventuell gebildeter Calciumcarbonat-Inkrustationen. Vor allem in harten Gebirgswässern mit erhöhtem pH-Wert und damit verschärfter Inkrustationsproblematik zeigt PSI günstigerweise eine erhöhte Löslichkeit. Zudem ist PSI wegen seiner langsamen Hydrolyse bei zugleich geringer Wasserlöslichkeit lange am Einsatzort wirksam (slow-release Effekt).

Da die Wirkstofffreisetzung vom Polysuccinimid-Pulver/Granulat im Drainagewasser nach erstmaligem Abstreuen des Verkehrswegs nur sehr langsam ansteigt, wird erfindungsgemäß ein Lösungsbeschlcuniger eingesetzt.

Es hat sich nämlich gezeigt, dass wenn Sickerpackungen eine sehr große innere Oberfläche aufweisen, diese eine erhebliche Menge an PSI oder seiner Teilhydrolysate adsorbieren.

Eine hohe PSI Anfangskonzentration im Sickerwasser führt zu einer schnelleren Absättigung der inneren Oberfläche der Sickerpackungen und damit zu einem schnelleren Ansteigen der Wirkstoffkonzentration im Drainagewasser in den Drainageleitungen. Erfindungsgemäß wird deshalb die Sickerpackung nach dem erstmaligen Abstreuen des Verkehrswegs mit Polysuccinimid-Granulat zusätzlich mit einem Lösungsbeschleuniger behandelt, um die Sickerpackungsoberfläche mit Polyasparaginsäure vorzubelegen und das Polysuccinimid-Granulat zu fixieren.

Die Wirkstofffreisetzung vom Polysuccinimid-Granulat ist eine hydrolytische Reaktion. Das Polysuccinimid reagiert mit dem Niederschlagswasser auf der Sickerpackungsoberfläche zum Wirkstoff Polyasparaginsäure, der anschließend mit dem Niederschlagswasser in die Sickerpackungen hinein und zu den Drainageleitungen transportiert wird. Die Hydrolyse des Polysuccinimids ist eine langsame, pH-Wert-abhängige Reaktion, die eine schnelle Wirkstofffreisetzung und somit eine Überkonditionierung des Sicker- und Drainagewassers verhindert. Die Wirkstofffreisetzung auf der Oberfläche der Sickerpackung und der Transport des Wirkstoffs in die Sickerpackungen finden somit nur während des Anfallens von Niederschlägswasser auf der Oberfläche der Sickerpackungen statt. Die Adsorption der Polyasparaginsäure am Sickerpackungsmaterial im seitlichen Eintrittsbereich der Sickerwässer aus den Böschungen der Einschnitte soll einen ausreichenden Wirkstoffpuffer für die Konditionierung der Sickerwässer während der niederschlagsfreien Perioden gewährleisten.

Besonders bevorzugte Lösungsbeschleuniger sind Polyacrylate, NaOH, KOH oder Polyasparaginsäure. Ganz besonders bevorzugt sind Polyasparaginsäure. Alternativ ganz besonders bevorzugt sind aber auch NaOH oder KOH, insbesondere bevorzugt deren wässrige Lösungen. Eine weitere insbesondere besonders bevorzugte Ausführungsform beinhaltet Kalilauge oder Natronlauge als Lösungsbeschleuniger. Eine weitere besondere Ausführungsform der vorliegenden Erfindung ist ein Gemisch zweier oder mehrerer der vorgenannten Lösungsbeschleuniger.

Die Lösungsbeschleuniger werden entweder gleichzeitig oder zeitlich verzögert mit dem PSI Granulat/Pulver auf den zu behandelnden Verkehrsweg und somit auf dessen Drainagen und Sickerpackungen auf- oder eingebracht. Eingesetzt werden bevorzugt 1 bis 301 Lösungsbeschleuniger in wässriger Lösung pro Quadratmeter Verkehrsweg, besonders bevorzugt 5 bis 10 1 wässriger Lösung an Lösungsbeschleuniger.

Die wässrige Lösung an Lösungsbeschleuniger enthält dazu 0,1 bis 60 Gew.-% Lösungsbeschleuniger pro Liter Wasser, bevorzugt 1 bis 40 Gew.-% pro Liter Wasser.

Insbesondere ganz besonders bevorzugt wird Polyasparaginsäure als Lösungungsbeschleuniger eingesetzt. Es hat sich nämlich gezeigt, dass mit dem fortschreitenden Verbrauch des Polysuccinimid-Granulats auf der Oberfläche der Sickerpackungen die Wirkstoffkonzentration im versickernden Niederschlagswasser sukzessive abnimmt, da es sich bei der Wirkstofffreisetzung und den Adsorption-/Desorptionsvorgängen um Gleichgewichtsreaktionen handelt. Dementsprechend kann im Falle von Polyasparaginsäure die in den oberen Sickerpackungsschichten adsorbierte Polyasparaginsäure mit und nach dem Aufbrauchen des Polysuccinimid-Granulats langsam wieder desorbieren und so für die Härtestabilisation des Sicker- und Drainagewassers wieder verfügbar werden. Auch die oberen Sickerpackungsschichten können somit als Wirkstoffpuffer dienen, so dass das Niederschlagswasser - auch nach dem Aufbrauchen des Polysuccinimid-Granulats auf der Oberfläche der Sickerpackungen - über eine gewisse Zeitspanne weiterhin Polyasparaginsäure in tiefere Schichten der Sickerpackungen und in die Drainageleitungen transportieren kann.

Da die Adsorptions- und Desorptionsvorgänge konzentrationsabhängig stattfinden und weil die Polyasparaginsäure sehr gut biologisch abbaubar ist, kann eine Akkumulation des Wirkstoffs in den Sickerpackungen und in der Umwelt ausgeschlossen werden.

Erfindungsgemäß als Lösungsbeschleuniger für das PSI einzusetzende Polyacrylate und Polyasparaginsäuren sind beispielsweise aus WO 1998/022205 A1 oder EP 0 692 459 A1 bekannt. Die Herstellung der erfindungsgemäß einzusetzenden Polyasparaginsäure (PAS) und ihrer Derivate ist seit langem Gegenstand zahlreicher Veröffentlichungen und Patente. So kann die Herstellung durch thermische Polykondensation von Asparaginsäure erfolgen (J. Org. Chem. 26, 1084 (1961)).

US-A 4 839 461 (= EP-A 0 256 366) beschreibt die Herstellung von Polyasparaginsäure aus Maleinsäureanhydrid, Wasser und Ammoniak. Maleinsäureanhydrid wird in wässrigem Medium unter Zugabe von konzentrierter Ammoniak-Lösung in das Monoammoniumsalz umgewandelt.

In einer bevorzugten Ausführungsform wird die Polyasparaginsäure dadurch hergestellt, dass man das Umsetzungsprodukt des Maleinsäureanhydrits oder Maleinsäure mit Ammoniak, z. B. Maleinsäureammoniumsalz bei Temperaturen größer als 140°C, insbesondere größer als 180°C einer thermischen, gegebenenfalls einer kontinuierlichen Polymerisation unterwirft und das erhaltene Polysuccinimid durch Hydrolyse zu Polyasparaginsäure bzw. einem Salz davon umsetzt. Die Polyasparaginsäure kann auch durch Polymerisation von Asparaginsäure hergestellt werden.

Die Polyasparaginsäure enthält in einer bevorzugten Ausführungsform im wesentlichen wiederkehrende Einheiten folgender Struktur:
a) 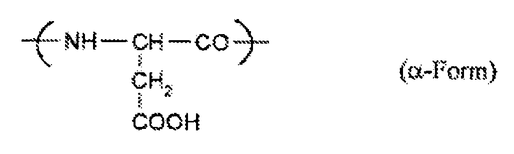 und
b)

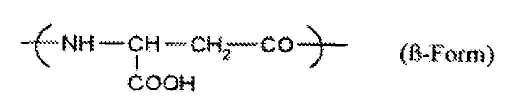

Im Allgemeinen liegt der Anteil der β-Form bei mehr als 50%, insbesondere mehr als 70%. Zusätzlich zu den wiederkehrenden Polyasparaginsäureeinheiten a) und b) können weitere wiederkehrende Einheiten enthalten sein, z. B.:
c) Äpfelsäureeinheiten der Formeln 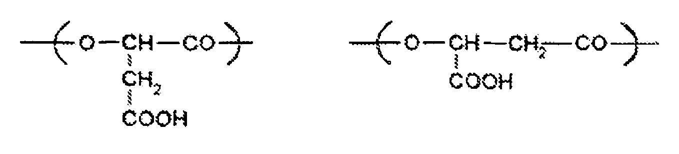
d) Maleinsäureeinheiten der Formel 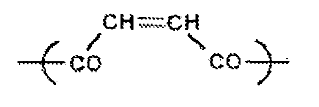
e) Fumarsäureeinheiten der Formel

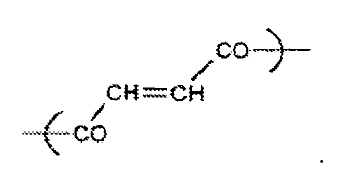

Bevorzugt werden Polymere mit einem Molekulargewicht nach gelpermeationschromatographischer Analyse von 500 bis 10.000, bevorzugt 1.000 bis 5.000, besonders bevorzugt 2.000 bis 4.000.

Bevorzugte Polyacrylate sind Verbindungen, die durch Homo- oder Copolymerisation ungesättigter ein- oder mehrbasischer Acryl- oder Methacrylsäuren und gegebenenfalls noch anderer zusätzlicher Comonomere hergestellt werden oder deren Herstellung zumindest alternativ auf diesem Weg möglich ist.

Bevorzugt sind die Acrylsäure und Methacrylsäure. Zusätzlich einpolymerisierbare Comonomere können z. B. sein:
- Derivate der Acryl- oder Methacrylsäure wie Ester und Amide, z. B. Acrylsäure-2-hydroxpropylester, 2-Acrylamido-2-methylpropansulfonsäure, Acrylamid, Acrylsäureethylester,
- Vinyl- oder Alkylether,
- Styrylsulfon- und -phosphonsäure, Vinylphosphonsäure,
- Olefine.

Das Molckulargewicht der Polyacrylate kann in einem weiten Bereich schwanken. Bevorzugt sind Produkte mit Molekulargewichten zwischen etwa 500 und 100.000.

Bei den ebenfalls einzusetzenden Alkalihydroxiden, werden bevorzugt Kaliumhydroxid oder Natriumhydroxid eingesetzt.

Wie bereits oben beschrieben, kann die Verwendung des Lösungsbeschleunigers auch in der Weise erfolgen, dass die Applikation von PSI und Lösungsbeschleuniger gleichzeitig, d. h. in einem Arbeitsschritt erfolgt.

Neben dem Lösungsbeschleuniger für PSI kann die Applikation weiterer Wirkstoffe erforderlich sein. Weitere Wirkstoffe im Sinne der vorliegenden Erfindung sind Biozide, Herbizide, Farbstoffe um nur einige Beispiele zu nennen.

Das in seiner wässrigen Löslichkeit beschleunigte Polysuccinimid ist erst in der Lage, dauerhaft Versinterungen in Sickerpackungen oder Drainagen von Verkehrswegen wirkungsvoll zu verhindern. Erfindungsgemäß zu verhindernde Versinterungen sind die Erdalkalisalze der Schwefelsäure, Phosphorsäure und Kohlensäure, bevorzugt die Magnesium-, Calcium- und Bariumsalze der Kohlensäure, insbesondere Calciumcarbonat. Diese können selbstverständlich mit weiteren Metallsalzen der Umgebung, so insbesondere Salzen des Eisens verunreinigt sein. Dauerhaft im Sinne der vorliegenden Erfindung bedeutet einen Zeitraum von wenigstens 20 Wochen, bevorzugt wenigstens 40 Wochen, insbesondere bevorzugt wenigstens 60 Wochen.

Zur Klarstellung sei angemerkt, dass vom Rahmen der Erfindung alle aufgeführten, allgemeinen oder in Vorzugsbereichen genannten Definitionen und Parameter in beliebigen Kombinationen umfasst sind.

### Beispiele

Drei Schotterbetttrassen mit Entwässerungssystem gleicher Bauart (Länge 10 m, Breite 1 m) wurden in folgender Weise behandelt:
Trasse A : 5 Liter/m² PAS-Lösung (40%)
Trasse B : 5 Liter/m² PAS-Lösung (40%) und 3 kg/m² PSI
Trasse C : 3 kg/m² PSI

Alle Trassen wurden mit 13 Liter Wasser pro Woche berieselt um eine durchschnittliche Niederschlagsmenge von 700 Liter/Jahr zu simulieren (Durchschnittswert am Beispiel Deutschland). Die Konzentration an Polyasparaginsäure (PAS) wurde an drei Messpunkten (jeweils 3m, 6m und 9m vom Beginn der Trassen gemessen und der Mittelwert der PAS-Konzentration gebildet. Die Konzentration wurde in Abständen von 1, 3, 5, 10, 15 und 20 Wochen bestimmt.

**Tab.1**

| **Trasse A** | | | | | | |
|---|---|---|---|---|---|---|
| **Woche** | **1** | **3** | **5** | **10** | **15** | **20** |
| **Konzentration an PAS [mg/l] (Mittelwert aus 3 Meßstellen)** | **5** | **9** | **6** | **4** | **2** | **1** |
| | | | | | | |

| **Trasse B** | | | | | | |
|---|---|---|---|---|---|---|
| **Woche** | **1** | **3** | **5** | **10** | **15** | **20** |
| **Konzentration an PAS [mg/l] (Mittelwert aus 3 Meßstellen)** | **8** | **16** | **18** | **19** | **20** | **19** |
| **Konzentration an PAS [mg/l] aus PSI (Delta zu A) (Mittelwert aus 3 Meßstellen)** | **3** | **7** | **12** | **15** | **18** | **18** |
| | | | | | | |

| **Trasse C** | | | | | | |
|---|---|---|---|---|---|---|
| **Woche** | **1** | **3** | **5** | **10** | **15** | **20** |
| **Konzentration an PAS [mg/l] (Mittelwert aus 3 Meßstellen)** | **1** | **2** | **5** | **7** | **8** | **8** |
| | | | | | | |

| **Differenz Trasse B zu Trasse C** | | | | | | |
|---|---|---|---|---|---|---|
| **Woche** | **1** | **3** | **5** | **10** | **15** | **20** |
| **Konzentrationsdifferenz PAS [mg/l] aus PSI für Trasse B im Vergleich zu Trasse C** | **2** | **5** | **7** | **8** | **10** | **10** |

Tab. 1 stellt die analytischen Daten dar, wie sie bei Applikation des erfindungsgemäßen Verfahrens auf einer ca. 10 m langen Schotterbetttrasse durch Einsatz der o. g. Wirkstoffe. gemessen werden.

## Patentansprüche

1. Verwendung einer Verbindung der Reihe Polyacrylate, Polyasparaginsäure oder Alkalihydroxide als Lösungsbeschleuniger für Polysuccinimid.

2. Verwendung gemäß Anspruch 1, **dadurch gekennzeichnet, dass** man Polysuccinimid in Pulverform oder Granulatform auf den zu behandelnden Verkehrsweg ausbringt und mit dem Lösungsbeschleuniger als Hilfsmittel in die darunter liegenden Schichten des Verkehrsweges bis in die Drainagen eingespült.

3. Verwendung gemäß Anspruch 2, **dadurch gekennzeichnet, dass** es sich bei den Verkehrswegen um Bahntrassen, Bahnanlagen, Schienentrassen, Straßen, Rennpisten, Schotterstraßen sowie Schotterbetten von Bahnanlagen nebst dazugehörender Drainagesysteme handelt.

4. Verwendung gemäß der Ansprüche 1 bis 3, **dadurch gekennzeichnet, dass** die Teilchengröße des Polysuccinimidpulvers/Granulats 0,001 cm bis 3 cm beträgt.

5. Verwendung gemäß einem der Ansprüche 1 bis 4, **dadurch gekennzeichnet, dass** pro Quadratmeter zu behandelnden Verkehrsweg 1 bis 10 kg Polysuccinimid ausgebracht werden.

6. Verwendung gemäß einem der Ansprüche 1 bis 5, **dadurch gekennzeichnet, dass** die Konzentration des Polysuccinimids im zu konditionierenden Sicker- oder Grundwasser des Entwässerungssystems der zu behandelnden Verkehrswege 100 mg/Liter nicht überschreitet.

7. Verwendung gemäß Anspruch 6, **dadurch gekennzeichnet, dass** diese Konzentration in den Sickerpackungen des zu behandelnden Verkehrsweges gemessen wird.

8. Verwendung gemäß einem der Ansprüche 1 bis 7, **dadurch gekennzeichnet, dass** 1 bis 30 1 Lösungsbeschleuniger in wässriger Lösung pro Quadratmeter Verkehrsweg aufgebracht werden, wobei ein Liter 0,1 bis 60 Gew.-% Lösungsbeschleuniger enthält.

9. Verwendung gemäß einem der Ansprüche 1 bis 8, **dadurch gekennzeichnet, dass** gegebenenfalls zusätzlich Wasser mit einem pH-Wert von 8-11 als Lösungsbeschleuniger dient.

10. Verwendung gemäß einem der Ansprüche 1 bis 9 für den Einsatz des Polysuccinimids zur Verhinderung von Versinterungen in den Sickerpackungen oder Drainagen von Verkehrswegen.

## Claims

1. Use of a compound from the series consisting of polyacrylates, polyaspartic acid or alkali metal hydroxides as solubilizer for polysuccinimide.

2. Use according to Claim 1, **characterized in that** polysuccinimide in powder form or granule form is applied to the traffic route to be treated and is washed with the solubilizer as an auxiliary into the underlying layers of the traffic route and into the drains.

3. Use according to Claim 2, **characterized in that** the traffic routes are railway beds, railway facilities, rail routes, roads, racetracks, gravel roads and ballast beds of railway facilities together with associated drainage systems.

4. Use according to Claims 1 to 3, **characterized in that** the particle size of the polysuccinimide powder/granules is 0.001 cm to 3 cm.

5. Use according to any of Claims 1 to 4, **characterized in that** 1 to 10 kg of polysuccinimide are applied per square metre of traffic route to be treated.

6. Use according to any of Claims 1 to 5, **characterized in that** the concentration of the polysuccinimide in the seepage or groundwater of the drainage system of the traffic routes to be treated, which seepage or groundwater is to be conditioned, does not exceed 100 mg/litre.

7. Use according to Claim 6, **characterized in that** this concentration is measured in the seepage water drain packings of the traffic route to be treated.

8. Use according to any of Claims 1 to 7, **characterized in that** 1 to 30 1 of solubilizer in aqueous solution are applied per square metre of traffic route, one litre containing 0.1 to 60% by weight of solubilizer.

9. Use according to any of Claims 1 to 8, **characterized in that** optionally additionally water having a pH of 8-11 serves as solubilizer.

10. Use according to any of Claims 1 to 9 for the use of the polysuccinimide for preventing sintering in the seepage water drain packings or drains of traffic routes.

## Revendications

1. Utilisation d'un composé de la série des polyacrylates, de l'acide polyasparaginique ou des hydroxydes alcalins en tant qu'accélérateur de dissolution pour le polysuccinimide.

2. Utilisation selon la revendication 1, **caractérisé en ce que** le polysuccinimide est appliqué sous la forme d'une poudre ou sous la forme d'un granulat sur la voie de communication à traiter et infiltré avec l'accélérateur de dissolution en tant qu'adjuvant dans les couches sous-jacentes de la voie de communication jusqu'aux réseaux de drainage.

3. Utilisation selon la revendication 2, **caractérisée en ce que** les voies de communication sont des voies ferroviaires, des installations ferroviaires, des voies de chemin de fer, des rues, des champs de courses, des routes de gravier et des lits de gravier d'installations ferroviaires, ainsi que les systèmes de drainage correspondants.

4. Utilisation selon les revendications 1 à 3, **caractérisée en ce que** la taille de particule de la poudre/du granulat de polysuccinimide est de 0,001 à 3 cm.

5. Utilisation selon l'une quelconque des revendications 1 à 4, **caractérisée en ce que** 1 à 10 kg de polysuccinimide sont appliqués par mètre carré de voie de communication à traiter.

6. Utilisation selon l'une quelconque des revendications 1 à 5, **caractérisée en ce** la concentration du polysuccinimide dans l'eau d'infiltration ou souterraine à conditionner du système de drainage des voies de communication à traiter ne dépasse pas 100 mg/litre.

7. Utilisation selon la revendication 6, **caractérisée en ce que** cette concentration est mesurée dans la couche de drainage de la voie de communication à traiter.

8. Utilisation selon l'une quelconque des revendications 1 à 7, **caractérisée en ce que** 1 à 30 1 d'accélérateur de dissolution en solution aqueuse sont appliqués par mètre carré de voie de communication, un litre contenant 0,1 à 60 % en poids d'accélérateur de dissolution.

9. Utilisation selon l'une quelconque des revendications 1 à 8, **caractérisée en ce** de l'eau ayant un pH de 8 à 11 sert éventuellement également d'accélérateur de dissolution.

10. Utilisation selon l'une quelconque des revendications 1 à 9, pour l'application du polysuccinimide pour éviter les agglomérés dans les couches de drainage ou les circuits de drainage de voies de communication.
